# EUROPÄISCHE PATENTSCHRIFT

(11) **EP 2 950 519 B1**
(45) Veröffentlichungstag und Bekanntmachung des Hinweises auf die Patenterteilung: **25.05.2016**
(21) Anmeldenummer: 14169806.8
(22) Anmeldetag: 26.05.2014
(51) Int. Cl.: H04N 5/225

(54) **Kamera und Verfahren zur Aufnahme von Bilddaten**
Camera and method for capturing image data
Caméra et procédé de capture de données d'image

(43) Veröffentlichungstag der Anmeldung: 02.12.2015
(73) Patentinhaber: SICK AG, 79183 Waldkirch (DE)
(72) Erfinder: Weber, Helmut, 79312 Emmendingen (DE); Schneider, Dr. Florian, 79276 Reute (DE)
(74) Vertreter: Ludewigt, Christoph

(56) Entgegenhaltungen:
- EP-A1- 1 931 133
- EP-A1- 2 657 881
- JP-A- 2003 167 205
- US-A- 5 280 161

## Beschreibung

Die Erfindung betrifft eine Kamera mit einem Bildsensor und ein Verfahren zur Aufnahme von Bilddaten nach dem Oberbegriff von Anspruch 1 beziehungsweise 10.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Eine häufige Erfassungssituation ist die Montage der Kamera über einem Förderband, wo in Abhängigkeit der gewonnenen Objekteigenschaften weitere Bearbeitungsschritte eingeleitet werden. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird.

Der Erfassungsbereich einer herkömmlichen Kamera reicht oft nicht aus, um die volle gewünschte Breite insbesondere eines Förderbandes abzudecken. Als ein bekannter Ausweg werden mehrere Kameras nebeneinander montiert. Das löst zwar das Problem, erfordert aber einen erheblichem Mehraufwand für die mehreren Kameras sowie deren Montage und Koordinierung.

In der DE 20 2013 009 198 U1 wird deshalb ein System zur Sichtfelderweiterung einer Kamera vorgeschlagen, das auf einem aufgesetzten Modul mit zwei Spiegeln basiert. Dadurch wird ein verbreiterter Sichtbereich in zwei Streifen übereinander auf dem Bildsensor abgebildet. Abhängig von der Brennweite kann das Modul recht groß werden. Außerdem führt die Verkippung in zwei Achsen dazu, dass die Abbildungen der beiden Streifen in einem leichten Winkel zueinander stehen. Wenn auch die Beleuchtung die Spiegel nutzt, ergibt sich objektseitig in einem Überlappungsbereich der beiden Streifen eine lokale Helligkeitsüberhöhung.

Die EP 2 624 042 A2 zeigt einen Spiegelaufsatz mit einer Konstruktion aus vier Spiegeln für eine ähnliche Sichtfeldverbreiterung. Durch die zusätzlichen Spiegel lässt sich zwar die Verkippung der abgebildeten Streifen vermeiden, dafür erhöht sich aber auch der Aufwand für den Spiegelaufsatz. Außerdem fordert diese Lösung noch mehr Bauraum.

Die EP 1 931 133 A1 nutzt verschiedene Ausführungsformen einer Optik, um eine Struktur mehrfach in voneinander getrennten und versetzten Bereichen auf einem Bildaufnehmer abzubilden. Eine Ausführungsform basiert auf einem Doppelprisma, ohne aber dessen Gestaltung und Anwendung näher zu erläutern. Eine Beleuchtung ist dabei nicht vorgesehen.

Aus der DE 10 2005 031 710 A1 ist bekannt, das Lesefeld einer codelesenden Zeilenkamera mit einer Linienanordnung von Leuchtdioden auszuleuchten. Die Sendeoptik ordnet in einigen Ausführungsformen jeder Leuchtdiode eine Linse mit einer Keilfläche zu. Dadurch werden die einzelnen Beleuchtungsfelder der Leuchtdiode verschoben, um insgesamt eine homogene Lichtlinie zu bilden. Mit einer Sichtfelderweiterung befasst sich die DE 10 2005 031 710 A1 nicht, und die Zeilenkamera hätte auch gar keine Möglichkeit, Streifen übereinander abzubilden.

Die EP 2 657 881 A1 offenbart eine Beleuchtungsvorrichtung für einen kamerabasierten Codeleser. Eine Sendeoptik der Beleuchtungsvorrichtung weist mehrere Linsen in einem Optikhalter auf, der an mindestens einem Fixpunkt festgelegt ist. Bei Verstellen der Beleuchtung auf einen anderen Arbeitsabstand, verformt sich der Optikhalter wegen des Fixpunktes und verkippt so die Linsen in radialer Richtung.

Daher ist Aufgabe der Erfindung, die Aufnahme von Bilddaten bei einer Sichtfelderweiterung zu verbessern.

Diese Aufgabe wird durch eine Kamera mit einem Bildsensor und ein Verfahren zur Aufnahme von Bilddaten nach Anspruch 1 beziehungsweise 10 gelöst. Zur Sichtbereichsverbreiterung der Kamera bildet eine erste Umlenkeinheit für den Empfangspfad mit mindestens zwei Empfangslicht-Umlenkelementen zwei nebeneinanderliegende Teilbereiche des Erfassungsbereichs übereinander auf dem Bildsensor ab. Die Erfindung geht nun von dem Grundgedanken aus, eine zweite Umlenkoptik für den Sendepfad mit mehreren Beleuchtungs-Umlenkelementen vorzusehen, welche die Beleuchtungsfelder der Lichtquellen verschieben und so die Teilbereiche gleichmäßig ausleuchten.

Unter einem Umlenkelement wird hierbei ein refraktives optisches Element verstanden, das also auf Lichtbrechung und nicht wie ein Spiegel auf Reflexion basiert. Relative geometrischen Beziehungen wie nebeneinander oder übereinander sind bei Drehung der Kamera austauschbar. Weiterhin entspricht die Anzahl der Lichtquellen nicht zwingend derjenigen der Beleuchtungs-Umlenkelemente, indem beispielsweise ein Beleuchtungs-Umlenkelement für je zwei Lichtquellen zuständig ist.

Die Erfindung hat den Vorteil, dass durch die Umlenkelemente ein kompakterer Aufbau möglich ist, bei dem also die Baugröße verringert wird und zugleich die Teilbereiche nicht oder weniger gegeneinander verkippt sind als bei der Verwendung von Spiegeln. Die mit den Beleuchtungs-Umlenkelementen erzielte gleichmäßigere Ausleuchtung äußert sich beispielsweise in einem geringeren Randbereichsabfall beziehungsweise einem Verschieben des Randbereichsabfalls nach außerhalb des Erfassungsbereichs sowie in der Vermeidung einer Intensitätsüberhöhung, wenn sich die Teilbereiche überlappen.

Die Empfangslicht-Umlenkelemente weisen bevorzugt Prismen auf. Die erste Umlenkoptik ist damit vorzugsweise ein Doppel- oder Mehrfachprisma. Die einzelnen Prismen sind für einen symmetrischen Aufbau vorzugsweise gleichartig ausgebildet. Allerdings sind auch Abweichungen denkbar, bis hin zu dem Extremfall, in dem eines der Empfangslicht-Umlenkelemente eine einfache Platte ohne optischen Effekt oder gar gänzlich abwesend ist. Auch das kann nämlich genügen, um die Übereinanderabbildung von Teilbereichen bei homogener Ausleuchtung zu erzielen, indem das andere Empfangslicht-Umlenkelement entsprechend als Prisma möglicherweise mit größeren Ablenkwinkeln ausgestaltet wird.

Die Prismen weisen bevorzugt Abschrägungen in Längs- und Querrichtung auf. Mit Abschrägungen sind die schräg gestellten Flächen gemeint, die zum optischen Effekt des Prismas führen, einem Lichtstrahl durch Brechung eine neue Richtung zu geben. Ein Schrägstellen dieser Fläche in Längsrichtung sorgt für einen Expandierwinkel, welcher den Erfassungsbereich aufweitet. Das zusätzliche Schrägstellen in Querrichtung schiebt dann die beiden abgebildeten Teilbereiche sozusagen auf gleiche Höhe. Übrigens kommt es hierbei nicht darauf an, ob es sich im geometrischen Sinne noch um ein Prisma handelt, sondern auf den beschriebenen optischen Effekt, einen Lichtstrahl in Längs- und Querrichtung abzulenken oder praktisch zu knicken, so dass das entsprechende Umlenkelement im Rahmen dieser Beschreibung weiterhin als Prisma bezeichnet wird.

Die Prismen weisen bevorzugt auf Vorder- und Rückseite Abschrägungen auf. Dadurch erfolgt die Ablenkung nicht nur an einer Fläche, sondern an der Vorder- und Rückfläche. Dies ermöglicht zusätzliche Gestaltungsoptionen, mit denen Abbildungsfehler oder störende Rückreflexionen unterdrückt werden können.

Die Empfangslicht-Umlenkelemente sind in Weiterbildung der Erfindung zweiteilig mit einer transparenten elastischen Zwischenschicht ausgebildet. Die beiden Teile sind beispielsweise Platten oder selbst schon Prismen. Durch Krafteinwirkung auf die transparente elastische Zwischenschicht kann in dieser Ausbildung der effektive Ablenkwinkel flexibel eingestellt werden.

Jeder Lichtquelle ist bevorzugt ein Beleuchtungs-Umlenkelement zugeordnet. Es gibt also in dieser Ausführungsform eine eineindeutige Zuordnung von Lichtquellen und Beleuchtungs-Umlenkelementen. Dadurch entsteht die größtmögliche Vielfalt an Anpassungen für die Beleuchtungsfelder.

Die Beleuchtungs-Umlenkelemente weisen bevorzugt Prismen auf. Für die Ausgestaltungsmöglichkeiten und Vorteile solcher Prismen gilt das zu den Empfangslicht-Umlenkelementen Entsprechende. Es ist auch denkbar, jeweilige Sendeoptiken mit Prismen zu kombinieren, indem die Grundfläche einer Linse angeschrägt wird.

Die Beleuchtungs-Umlenkelemente sind bevorzugt um die Empfangslicht-Umlenkelemente herum angeordnet. Diese Anordnung ist insbesondere kreisförmig. Diese Anordnung ermöglicht die effektive Ausleuchtung des Erfassungsbereichs, die durch die Beleuchtungs-Umlenkelemente noch gleichmäßiger wird. Die Anordnung der Lichtquellen ist vorzugsweise entsprechend um eine Empfangsoptik des Bildsensors herum und insbesondere kreisförmig.

Die erste Umlenkoptik und die zweite Umlenkoptik sind bevorzugt als gemeinsames Bauteil ausgebildet. So wird, beispielsweise durch einteilige Herstellung insbesondere als Spritzgussteil, die empfangs- und sendeseitige Umlenkung besonders einfach, bauklein und kostengünstig erreicht.

Die Kamera ist bevorzugt ein kamerabasierter Codeleser oder eine Kamera zur Inspektion oder Vermessung von Objekten und weist eine Auswertungseinheit zum Lesen von Codes oder Bestimmen von Objekteigenschaften aus den Bilddaten auf. Durch die Umlenkelemente kann beispielsweise ein breiteres Förderband abgedeckt und homogen beleuchtet werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer Kamera mit Umlenkoptiken;
- Fig. 2a: eine dreidimensionale Ansicht einer Ausführungsform einer Umlenkoptik als Doppelprisma;
- Fig. 2b: eine dreidimensionale Ansicht nur eines Prismas eines Doppelprismas;
- Fig. 3: eine dreidimensionale Ansicht einer kombinierten Umlenkoptik für Empfangs- und Sendepfad;
- Fig. 4a: eine Darstellung der Abbildung zweier Teilbereiche eines Erfassungsbereichs mit einem Doppelprisma als Ausschnitt im Nahbereich;
- Fig. 4b: die Darstellung gemäß Figur 4a in anderem Maßstab;
- Fig. 5a: eine Darstellung gemäß Figur 4a bei Drehung um 90° um die optische Achse;
- Fig. 5b: die Darstellung gemäß Figur 5a in anderem Maßstab;
- Fig. 6: eine Illustration der Abbildung nebeneinander liegender Teilbereiche eines Objekts übereinander auf einem Bildsensor;
- Fig. 7a: eine beispielhafte Verteilung von Lichtquellen um die optische Achse einer Empfangsoptik herum;
- Fig. 7b: eine Tabelle der Kippwinkel der Lichtquellen gemäß Figur 7a;
- Fig. 8a: eine Intensitätsverteilung der Beleuchtung ohne sendeseitige Umlenkelemente zum Vergleich; und
- Fig. 8b: eine Intensitätsverteilung der Beleuchtung mit geeignet angepassten sendeseitigen Umlenkelementen.

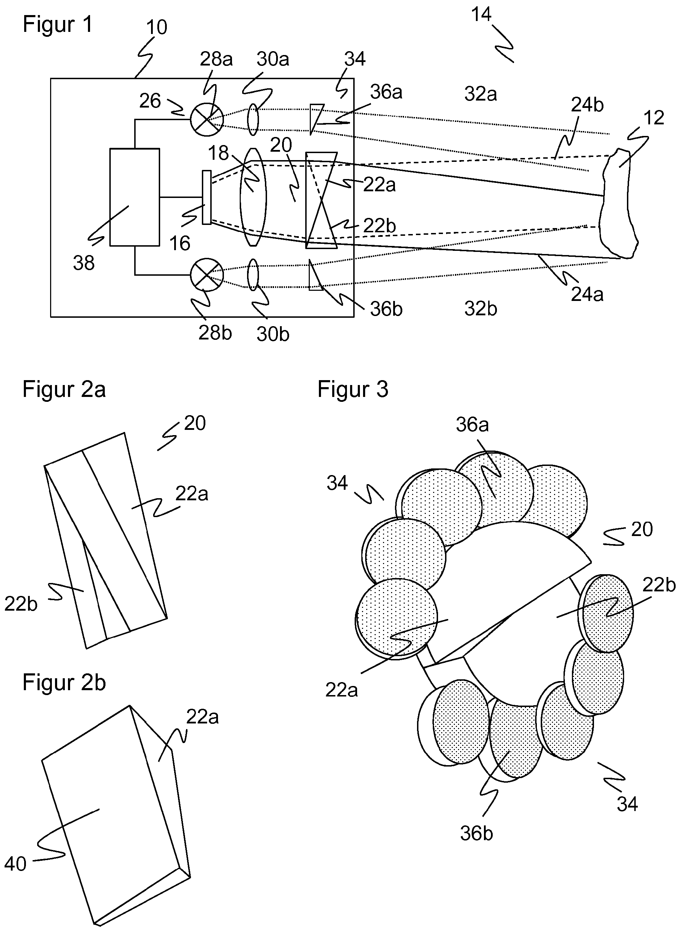

Figur 1 zeigt eine Blockdarstellung einer Kamera 10 zur Erfassung von Bilddaten eines Objekts 12 in einem Erfassungsbereich 14 mit Hilfe eines Bildsensors 16. Dem Bildsensor 16 ist eine stellvertretend für ein beliebiges Objektiv durch eine einfache Linse dargestellte Empfangsoptik 18 vorgeordnet. Eine beispielhaft als Doppelprisma ausgestaltete empfangsseitige Umlenkoptik 20 mit zwei Prismen 22a-b teilt den Erfassungsbereich 14 in zwei Teilbereiche 24a-b, die auf dem Bildsensor 16 übereinander abgebildet werden.

Eine Beleuchtungseinheit 26 erzeugt mit mehreren Lichtquellen 28a-b und diesen vorgeordneten Sendeoptiken 30a-b Beleuchtungsfelder 32a-b. Eine sendeseitige Umlenkoptik 34 mit mehreren Prismen 36a-b verschiebt die Beleuchtungsfelder 32a-b, um in deren Überlagerung eine homogene Ausleuchtung für die Abbildungen der Teilbereiche 24a-b zu erzielen. Die in der Schnittdarstellung der Figur 1 nur zu beiden Seiten angeordneten Elemente 28a-b, 30a-b, 36a-b der Beleuchtungseinheit 26 sind in einer bevorzugten Ausführungsform ringförmig um die optische Achse der Empfangsoptik 18 verteilt.

Eine Auswertungseinheit 38 empfängt die Bilddaten des Bildsensors 16 und steuert die Beleuchtungseinheit 26. Aus den Bilddaten werden Objektinformationen gewonnen, je nach Ausprägung und Anwendung zur Inspektion mit Vermessen oder Nachweis bestimmter Farb- und Formeigenschaften oder speziell bei einem kamerabasierten Codeleser zum Identifizieren von Codebereichen und Auslesen der Codeinformationen etwa von Strichcodes oder zweidimensionalen Codes.

Figur 2a zeigt die empfangsseitige Umlenkoptik 20 in einer dreidimensionalen Darstellung. Die Ausführungsform als Doppelprisma und erst recht die konkrete dargestellte Geometrie sind nur beispielhaft zu verstehen. Andere auf Lichtbrechung basierende Umlenkungen sind ebenfalls möglich, etwa durch Freiformflächen, verkippte insbesondere torische Linsen und dergleichen. Allerdings ist wichtig, dass tatsächlich eine Umlenkung des Strahlengangs stattfindet, etwa im Gegensatz zu einer einfachen Bündelung, da sonst die Teilbereiche 24a-b nicht übereinander auf dem Bildsensor 16 abgebildet werden könnten. Eine zusätzliche Bündelung beispielsweise durch Krümmung einiger Flächen des Doppelprismas ist aber möglich, ebenso eine zusätzliche Nutzung der Prismenflächen zur Korrektur von Abbildungsfehlern, ggf. auch durch "Hintereinanderschaltung" mehrerer Prismen oder Kombination der Prismen mit weiteren optischen Elementen. Durch mehr als zwei nebeneinanderliegenden Prismen 22a-b können zusätzliche Teilbereiche 24a-b erzeugt und auf dem Bildsensor 16 übereinander abgebildet werden, um den Erfassungsbereich 14 zusätzlich zu erweitern.

Figur 2b zeigt ein einzelnes Prisma 22a der empfangsseitigen Umlenkoptik 20. Dabei ist zu erkennen, dass sowohl in Längsrichtung als auch in Querrichtung Abschrägungen vorhanden sind. Die Vorderfläche 40 des Prismas 22a ist also in beiden Richtungen gegenüber der in Figur 2b nicht sichtbaren Rückfläche verkippt und sorgt für eine Lichtumlenkung in zwei Achsen. Die Ablenkwinkel sind außer von den Prismenwinkeln auch von der Brechzahl der Prismen 22a-b abhängig.

Figur 3 zeigt eine dreidimensionale Darstellung einer Ausführungsform der Umlenkoptiken 20, 34. Das Doppelprisma der empfangsseitigen Umlenkoptik 20 hat hier eine in etwa kreisrunde Außenkontur und ist ringförmig von der sendeseitigen Umlenkoptik 34 umgeben. Die Prismen 36a-b der sendeseitigen Umlenkoptik 34 sind in zwei Gruppen unterteilt, die den beiden Prismen 22a-b der empfangsseitigen Umlenkoptik 20 zugeordnet sind. Prismen 36a-b sind jeweils einer Lichtquelle 28a-b zugeordnet und gegeneinander verkippt, um die Beleuchtungsfelder 32a-b zu einer homogenen Gesamtausleuchtung zu verschieben.

Die einzelnen Prismen 36a-b und 22a-b können jeweils unterschiedliche Verkippungen aufweisen und dementsprechend unterschiedliche Ablenkwinkel bewirken. Es ist aber auch denkbar, dass z.B. die Prismen 36a bzw. 36b, also die sendeseitigen Prismen, die dem empfangsseitigen Prisma 22a bzw. 22b zugeordnet sind, alle die gleiche Verkippung aufweisen. Dabei können auch mehrere Lichtquellen einem Prisma 36a bzw. 36b zugeordnet sein. In der einfachsten Ausführung können die Verkippungen der sendeseitigen Prismen eines Teilbereichs, also 36a bzw. 36b, gleich wie die Verkippung des zugeordneten empfangsseitigen Prismas 22a bzw 22b sein.

Die Umlenkoptiken 20, 34 können aus Glas oder Kunststoff hergestellt sein. Letzteres erlaubt auf besonders einfache Weise, etwa in einem Spritzguss- oder Spritzprägeverfahren, die Umlenkoptiken 20, 34 in einer bevorzugten Ausführungsform einstückig als gemeinsames Bauteil herzustellen. Eine Nachbearbeitung oder Vergütung der Durchgangsflächen zur Erhöhung der Abbildungsqualität ist denkbar.

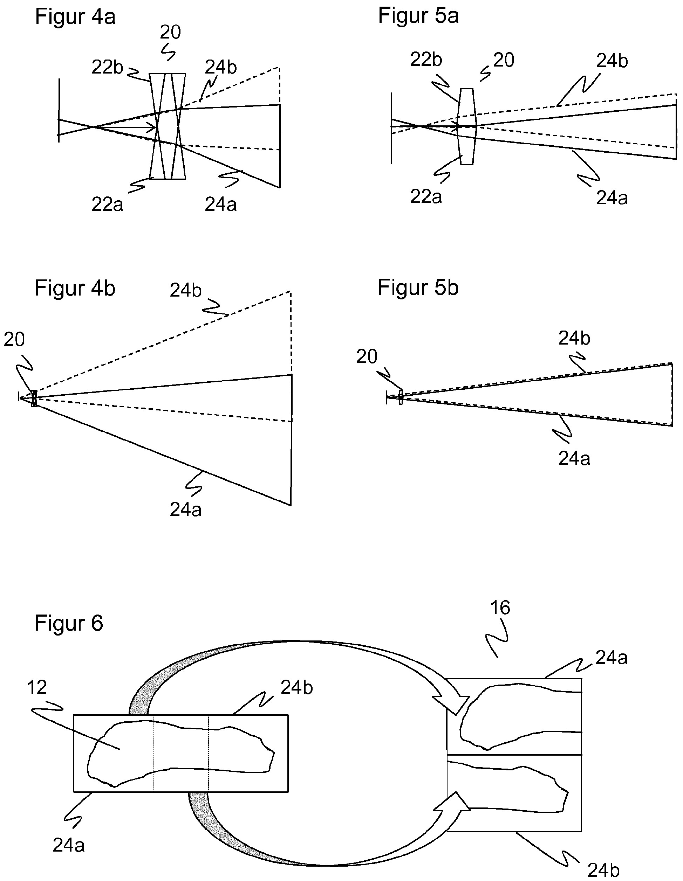

Anhand der Figuren 4 bis 6 wird nun die Abbildung der empfangsseitigen Umlenkoptik 20 näher erläutert. Figur 4 illustriert die Ablenkung in Längsrichtung, wo die Ablenkung einen Expandierwinkel erzeugt, der zu einer Aufweitung des Objektfeldes oder Erfassungsbereichs 14 führt. Dabei ist Figur 4a eine Ausschnittdarstellung des Nahbereichs, während Figur 4b den Strahlengang in größerem Maßstab zeigt. Die Überlappung der beiden Teilbereiche 24a-b kann durch Wahl der Prismenwinkel größer sein oder umgekehrt ganz zum Verschwinden gebracht werden. Auch eine Lücke zwischen den Teilbereichen 24a-b ist denkbar, wenn z.B. der Sichtbereich der Kamera 10 zwei parallele Fließbänder mit irrelevantem Zwischenbereich umfasst. In Summe decken die Teilbereiche 24a-b eine größere Breite ab als Bildsensor 16 und Empfangsoptik 18 ohne die empfangsseitige Umlenkoptik 18.

Figur 5 illustriert entsprechend die Ablenkung in Querrichtung, ist also eine gegenüber der Figur 4 um 90° um die optische Achse verdrehte Ansicht. Erneut ist Figur 5a eine Ausschnittdarstellung des Nahbereichs, und Figur 5b zeigt den Strahlengang in größerem Maßstab. Die Ablenkung erzeugt in diesem Ausführungsbeispiel in der Querrichtung einen Korrekturwinkel, mit dem die Teilbereiche 24a-b auf gleiche Höhe geschoben werden können. Diese Korrektur ist applikationsabhängig und kann gegebenenfalls nicht notwendig oder sogar unerwünscht sein.

Der Effekt der empfangsseitigen Umlenkoptik 20 auf das Bild der Kamera 10 wird nochmals beispielhaft illustriert. Links ist der Objektbereich, also der erweiterte Erfassungsbereich 14 mit dem Objekt 12 dargestellt, wo die beiden Teilbereiche 24a-b aufgrund der Umlenkung in Längsrichtung nebeneinander liegen und somit eine größere Breite abdecken. In lateraler Richtung liegen die Teilbereiche 24a-b aufgrund geeigneter Prismenwinkel in Querrichtung auf gleicher Höhe.

Im Bildbereich beziehungsweise auf dem Bildsensor 16 dagegen werden die Teilbereiche 24a-b übereinander abgebildet, wie rechts in Figur 6 dargestellt. Damit kann ein herkömmlicher Bildsensor 16 beziehungsweise eine Empfangsoptik 18 mit eher quadratischem und üblichem Bildverhältnis (aspect ratio) von beispielsweise 4/3 oder 16/9 eingesetzt werden und dennoch ein sehr breites Bildformat erzielt werden.

Durch nachgelagerte Bildbearbeitung in der Auswertungseinheit 18 oder extern ist es möglich, die beiden Teilbereiche 24a-b nebeneinander zusammenzufügen (Image Stitching). Andererseits ist auch denkbar, die in beiden Teilbereichen 24a-b abgebildeten Überlappungsbereiche so groß zu lassen, dass ein aufgenommener Objektabschnitt oder interessierender Bereich (ROI) bekannter Größe, insbesondere ein Code, stets vollständig in zumindest einem Teilbereich 24a-b erfasst ist. Dann ist ein Zusammenfügen zu einem homogenen Bild zur weiteren Auswertung beziehungsweise Decodierung gar nicht erforderlich.

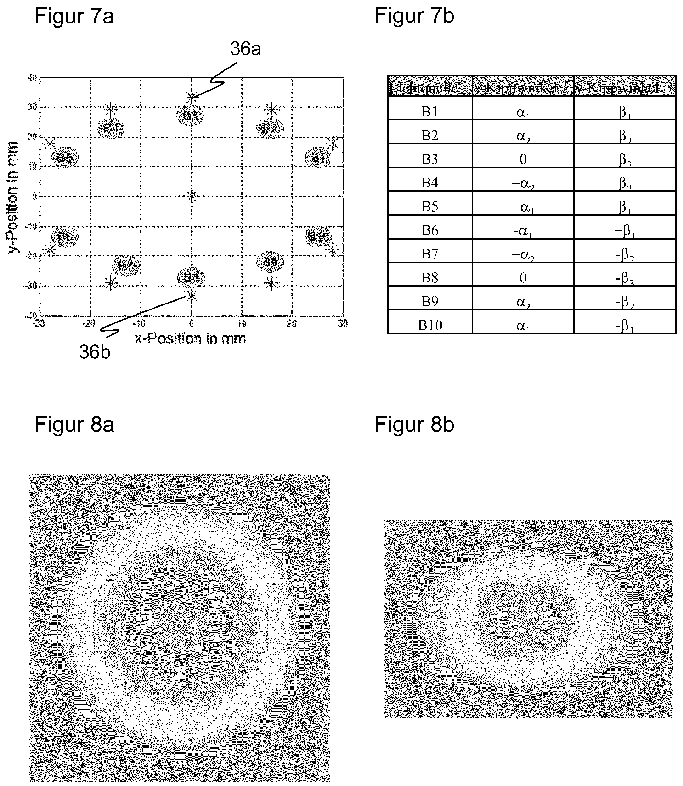

Die Figuren 7 und 8 erläutern eine mögliche Ausgestaltung der sendeseitigen Umlenkoptik 34. Deren Aufgabe ist, unter Berücksichtigung der empfangsseitigen Umlenkoptik 20 für ein homogen und effizient ausgeleuchtetes Bild auf dem Bildsensor 16 zu sorgen. Dazu sollen konkret Ablenkwinkel oder Verkippungen der einzelnen Prismen 36a-b gewählt werden, die beispielsweise einen Randlichtabfall oder eine Intensitätsüberhöhung im Zentrum vermeiden (Homogenität) und zugleich ein gutes Verhältnis von Beleuchtungsintensität innerhalb zu außerhalb des Erfassungsbereichs erreichen (Effizienz).

Figur 7a zeigt eine beispielhafte zur optischen Achse der Kamera 10 punktsymmetrische Verteilung von hier zehn Lichtquellen 28a-b beziehungsweise diesen vorgeordneten Prismen 34a-b. In der Tabelle gemäß Figur 7b werden Kippwinkel in zwei Achsen definiert. Aufgrund der Punktsymmetrie genügen zur Beschreibung der Verkippungen insgesamt fünf Parameter α₁-α₂, β₁-β₃.

Durch Simulation können diese fünf Parameter nun systematisch variiert und die jeweilige Homogenität und Effizienz bewertet werden. Daraus ergeben sich optimierte Kippwinkel. Figur 8 zeigt ein Beispiel einer erreichbaren Verbesserung, wobei Figur 8a in Graustufen die Intensitätsverteilung ohne die sendeseitige Umlenkoptik 34 und Figur 8b eine durch die sendeseitige Umlenkoptik 34 mit geeigneten Kippwinkeln erreichte Intensitätsverteilung darstellt. Bei der Optimierung kann auch eine Auswahl getroffen werden, welches Kriterium das wichtigere ist, beispielsweise mit etwas weniger Effizienz besonders wenig Randabfall erreicht werden oder umgekehrt.

Wie mehrfach betont, sind die dargestellten Ausführungsformen beispielhaft zu verstehen. Einige mögliche Variationen werden nachfolgend noch genannt. So zeigen die Figuren 4 und 5 ein Doppelprisma als empfangsseitige Umlenkoptik 20, bei dem sowohl Eintritts- als auch Austrittsflächen Prismenwinkel aufweisen. Es ist ebenso denkbar, eine der beiden Flächen senkrecht anzuordnen, jedoch ermöglicht die Aufteilung der Ablenkung auf zwei Prismenwinkel eine vorteilhafte Beeinflussung von Abbildungsfehlern, Rückreflexen und ähnlichen Störeffekten. Auch können gegebenenfalls weitere Prismen oder andere optisch wirksame Elemente zusätzlich eingebracht werden.

Anstelle starrer Prismenwinkel kann ein transparentes elastisches Material, wie ein optisches Silikon, zwischen zwei Platten oder Prismen angeordnet werden. Dadurch entstehen justierbare Ablenkwinkel in beiden Achsen.

Wie schon gesagt können, Prismen überall durch andere lichtumlenkende Elemente ersetzt werden. Weiterhin ist denkbar, dass ein Prisma 22a-b des Doppelprismas der empfangsseitigen Umlenkoptik 20 oder ein bis mehrere Prismen 36a-b der sendeseitigen Umlenkoptik 34 weggelassen werden, so dass ein Teil des Strahlengangs unbeeinflusst bleibt und nur der übrige Strahlengang umgelenkt wird, mit im Prinzip demselben Ergebnis.

Der Strahlengang der Bildaufnahme ist von dem Strahlengang der Beleuchtung in den dargestellten Ausführungsformen separiert. Dies kann durch eine echte Kanaltrennung, etwa einen Tubus oder dergleichen, zur Unterdrückung von Streulicht oder Rückreflexen noch verstärkt werden. Durch die Auftrennung kann auch unabhängig ausgestaltet werden, etwa eine höhere optische Qualität im Empfangspfad als im Sendepfad angestrebt werden, da ggf. im Sendepfad geringere Anforderungen gestellt sind, um insgesamt Kosten zu sparen. Außerdem können durch die Zweiteilung von Abbildung und Beleuchtung insgesamt geringere Prismendicken verwendet werden, was die Herstellung vereinfacht und die Baugröße weiter verringert. Die jeweiligen Komponenten müssen auch nicht in einer Ebene liegen, was mehr Designoptionen bietet. Über die dargestellten Elemente hinaus sind noch zusätzliche optische Elemente denkbar. Dazu zählen eine nachgeschaltete weitere Umlenkung oder eine Korrekturoptik für Abbildungsfehler der Prismen 22a-b, 36a-b.

Die Umlenkoptiken 20, 34 können drehbar gestaltet werden, um den Erfassungsbereich 14 und die Teilbereiche 24a-b an die Anwendung anzupassen. Es ist bekannt, Zielvorrichtungen einzusetzen, die den Erfassungsbereich 14 beispielsweise durch ein Fadenkreuz markieren. Diese Zielvorrichtung kann auf beide Teilbereiche 24a-b aufgespalten werden, insbesondere durch Ausnutzung von Prismen 22a-b, 36a-b, um für beide Teilbereiche 34a-b eine Ausrichthilfe zu bieten. Schließlich können die Umlenkoptiken 20, 34 einen abnehmbaren Aufsatz bilden, mit dem eine Kamera 10 nachgerüstet wird, oder in einen Deckel beziehungsweise eine Frontscheibe der Kamera 10 integriert werden.

## Patentansprüche

1. Kamera (10) mit einem Bildsensor (16) zur Aufnahme von Bilddaten aus einem Erfassungsbereich (14)und einer ersten Umlenkoptik (20), die mindestens zwei Empfangslicht-Umlenkelemente (22a-b) aufweist, um mindestens zwei nebeneinanderliegende Teilbereiche (24a-b) des Erfassungsbereichs (14) übereinander auf dem Bildsensor (16) abzubilden,
**gekennzeichnet durch**
eine Beleuchtungseinheit (26) mit mehreren Lichtquellen (28a-b) zum Ausleuchten des Erfassungsbereichs (14) und eine zweite Umlenkoptik (34) mit mehreren den Lichtquellen (28a-b) zugeordneten Beleuchtungs-Umlenkelementen (36a), um Beleuchtungsfelder (32a-b) der Lichtquellen (28a-b) zu verschieben und so die Teilbereiche (24a-b) gleichmäßig auszuleuchten, wobei die Beleuchtungs-Umlenkelemente (36a) Prismen mit Kippwinkeln in zwei Achsen aufweisen.

2. Kamera (10) nach Anspruch 1,
wobei die Empfangslicht-Umlenkelemente (22a-b) Prismen aufweisen.

3. Kamera (10) nach Anspruch 2,
wobei die Prismen der Empfangslicht-Umlenkelemente (22a-b) Abschrägungen in Längs- und Querrichtung aufweisen.

4. Kamera (10) nach Anspruch 2 oder 3,
wobei die Prismen der Empfangslicht-Umlenkelemente (22a-b) auf Vorder- und Rückseite Abschrägungen aufweisen.

5. Kamera (10) nach einem der vorhergehenden Ansprüche,
wobei die Empfangslicht-Umlenkelemente (22a-b) zweiteilig mit einer transparenten elastischen Zwischenschicht ausgebildet sind.

6. Kamera (10) nach einem der vorhergehenden Ansprüche,
wobei jeder Lichtquelle (28a-b) ein einziges Beleuchtungs-Umlenkelement (36a-b) zugeordnet ist.

7. Kamera (10) nach einem der vorhergehenden Ansprüche,
wobei die Beleuchtungs-Umlenkelemente (36a) um die Empfangslicht-Umlenkelemente (22a-b) herum angeordnet sind.

8. Kamera (10) nach einem der vorhergehenden Ansprüche,
wobei die erste Umlenkoptik (20) und die zweite Umlenkoptik (34) als gemeinsames Bauteil ausgebildet sind.

9. Kamera (10) nach einem der vorhergehenden Ansprüche,
wobei die Kamera (10) ein kamerabasierter Codeleser oder eine Kamera zur Inspektion oder Vermessung von Objekten (12) ist und eine Auswertungseinheit (38) zum Lesen von Codes oder Bestimmen von Objekteigenschaften aus den Bilddaten aufweist.

10. Verfahren zur Aufnahme von Bilddaten aus einem Erfassungsbereich (14), bei dem mit Hilfe einer ersten Umlenkoptik (20) mit mindestens zwei Empfangslicht-Umlenkelementen (22a-b) zwei nebeneinanderliegende Teilbereiche (24a-b) des Erfassungsbereichs (14) übereinander auf einem Bildsensor (16) abgebildet werden,
**dadurch gekennzeichnet,**
**dass** der Erfassungsbereich (14) von einer Beleuchtungseinheit (26) mit mehreren Lichtquellen (28a-b) ausgeleuchtet wird und dass Beleuchtungsfelder (32a-b) der Lichtquellen (28a-b) mittels mehrerer den Lichtquellen (28a-b) zugeordneten Beleuchtungs-Umlenkelementen (36a-b) verschoben werden, um die Teilbereiche (24a-b) gleichmäßig auszuleuchten, wobei die Beleuchtungs-Umlenkelemente (36a-b) Prismen mit Kippwinkeln in zwei Achsen aufweisen.

## Claims

1. A camera (10) having an image sensor (16) for capturing image data from a detection area (14) and first deflection optics (20) comprising at least two reception light deflection elements (22a-b) in order to image at least two adjacent partial areas (24a-b) of the detection area (14) on the image sensor (16) one above the other,
**characterized by** an illumination unit (26) having several light sources (28a-b) for illuminating the detection area (14) and second deflection optics (34) with several illumination deflection elements (36a) associated with the light sources (28a-b) in order to shift illumination fields (32a-b) of the light sources (28a-b) and to thus homogenously illuminate the partial areas (24a-b), wherein the illumination deflection elements (36a-b) comprise prisms with tilt angles in two axes.

2. The camera (10) according to claim 1,
wherein the reception light deflection elements (22a-b) comprise prisms.

3. The camera (10) according to claim 2,
wherein the prisms of the reception light deflection elements (22a-b) comprise tapers in the longitudinal and transverse direction.

4. The camera (10) according to claim 2 or 3,
wherein the prisms of the reception light deflection elements (22a-b) comprise tapers at the front and rear face.

5. The camera (10) according to any of the preceding claims,
wherein the reception light deflection elements (22a-b) are formed in two parts with a transparent elastic intermediate layer.

6. The camera (10) according to any of the preceding claims,
wherein a single illumination deflection element (36a-b) is associated with each light source (28a-b).

7. The camera (10) according to any of the preceding claims,
wherein the illumination deflection elements (36a) are arranged around the reception light deflection elements (22a-b).

8. The camera (10) according to any of the preceding claims,
wherein the first deflection optics (20) and the second deflection optics (34) are formed as a common component.

9. The camera (10) according to any of the preceding claims,
wherein the camera (10) is a camera-based code reader or a camera for inspection or measurement of objects (12) and comprises an evaluation unit (38) for reading codes or for determining object properties from the image data.

10. A method for capturing image data from a detection area (14), wherein by means of first deflection optics (20) having at least two reception light deflection elements (22a-b) two adjacent partial areas (24a-b) of the detection area (14) are imaged on an image sensor (16) one above the other,
**characterized in that** the detection area (14) is illuminated by an illumination unit (26) having several light sources (28a-b) and **in that** illumination fields (32a-b) of the light sources (28a-b) are shifted by several illumination deflection elements (36a-b) associated with the light sources (28a-b) in order to homogenously illuminate the partial areas (24a-b), wherein the illumination deflection elements (36a-b) comprise prisms with tilt angles in two axes.

## Revendications

1. Caméra (10) comprenant un capteur d'image (16) pour l'enregistrement de données image provenant d'une zone de détection (14) et une optique de renvoi (20), qui comprend au moins deux éléments de renvoi pour la lumière reçue (22a-b), afin de reproduire les images d'au moins deux zones partielles juxtaposées (24a-b) de la zone de détection (14) les unes sur les autres sur le capteur d'image (16), **caractérisée par**
une unité d'éclairage (26) avec plusieurs sources de lumière (28a-b) pour illuminer la zone de détection (14), et par une seconde optique de renvoi (34) avec plusieurs éléments de renvoi pour l'éclairage (36a) associés aux sources de lumière (28a-b), afin de déplacer des champs d'éclairage (32a-b) des sources de lumière (28a-b) et illuminer ainsi les zones partielles (24a-b) de manière régulière, et dans laquelle les éléments de renvoi pour l'éclairage (36a) comprennent des prismes avec des angles de basculement dans deux axes.

2. Caméra (10) selon la revendication 1,
dans laquelle les éléments de renvoi pour la lumière reçue (22a-b) comprennent des prismes.

3. Caméra (10) selon la revendication 2,
dans laquelle les prismes des éléments de renvoi pour la lumière reçue (22a-b) présentent des chanfreins en direction longitudinale et en direction transversale.

4. Caméra (10) selon la revendication 2 ou 3,
dans laquelle les prismes des éléments de renvoi pour la lumière reçue (22a-b) comportent des chanfreins sur le côté avant et sur le côté arrière.

5. Caméra (10) selon l'une des revendications précédentes,
dans laquelle les éléments de renvoi pour la lumière reçue (22a-b) sont réalisés en deux parties avec une couche intermédiaire élastique transparente.

6. Caméra (10) selon l'une des revendications précédentes,
dans laquelle un unique élément de renvoi pour l'éclairage (36a-b) est associé à chaque source de lumière (28a-b).

7. Caméra (10) selon l'une des revendications précédentes,
dans laquelle les éléments de renvoi pour l'éclairage (36a) sont agencés tout autour des éléments de renvoi pour la lumière reçue (22a-b).

8. Caméra (10) selon l'une des revendications précédentes,
dans laquelle la première optique de renvoi (20) et la seconde optique de renvoi (34) sont réalisées sous la forme d'un composant commun.

9. Caméra (10) selon l'une des revendications précédentes,
dans laquelle la caméra est un lecteur de code basé sur une caméra ou bien une caméra pour l'inspection ou le mesurage d'objets (12) et comprend une unité d'évaluation (3 8) pour la lecture de codes ou pour la détermination de propriétés d'objets à partir des données images.

10. Procédé pour l'enregistrement de données image à partir d'une zone de détection (14), dans lequel on reproduit, avec l'aide d'une première optique de renvoi (20) avec au moins deux éléments de renvoi pour la lumière émise (22a-b), les images de deux zones partielles juxtaposées (24a-b) de la zone de détection (14) les unes sur les autres sur un capteur d'image (16),
**caractérisé en ce que**
la zone de détection (14) est illuminée par une unité d'éclairage (26) avec plusieurs sources de lumière (28a-b), et **en ce que** des champs d'éclairage (32a-b) des sources de lumière (28a-b) sont déplacés au moyen de plusieurs éléments de renvoi pour l'éclairage (36a-b) associés aux sources de lumière (28a-b), afin d'illuminer les zones partielles (24a-b) de manière régulière, et les éléments de renvoi pour l'éclairage (36a-b) comprennent des prismes avec des angles de basculement dans deux axes.
